# EUROPEAN PATENT SPECIFICATION

(11) **EP 3 879 604 B1**
(45) Date of publication and mention of the grant of the patent: **16.10.2024**
(21) Application number: 18939602.1
(22) Date of filing: 09.11.2018
(51) Int. Cl.: H01M 4/1395, H01M 4/134, H01M 10/052, B24C 1/00, B08B 7/00, B24C 3/32, H01M 10/42, H01M 4/36, H01M 4/02

(54) **SURFACE TREATMENT METHOD FOR LITHIUM METAL NEGATIVE ELECTRODE**
OBERFLÄCHENBEHANDLUNGSVERFAHREN FÜR LITHIUM-METALL-NEGATIVELEKTRODE
PROCÉDÉ DE TRAITEMENT DE SURFACE D'UNE ÉLECTRODE NÉGATIVE AU MÉTAL LITHIUM

(43) Date of publication of application: 15.09.2021
(73) Proprietor: Grinergy Co.,Ltd., Seoul 06699 (KR)
(72) Inventor: KIM, SunHwan, Seoul 08528 (KR)
(74) Representative: Murgitroyd & Company
(86) International application number: PCT/KR2018/013624
(87) International publication number: WO 2020/096091

(56) References cited:
- WO-A1-2018/135929
- DE-A1- 102012 214 800
- JP-A- 2005 205 530
- JP-A- 2005 205 530
- JP-A- 2005 238 059
- JP-A- 2016 096 265
- JP-A- H1 142 442
- JP-A- H1 142 442
- KR-A- 20170 135 749
- KR-A- 20180 121 391
- KR-B1- 100 413 796
- US-A1- 2003 036 000
- US-A1- 2003 172 952
- US-A1- 2003 172 952
- US-A1- 2006 138 081
- US-A1- 2012 298 139
- US-A1- 2016 118 652

## Description

### TECHNICAL FIELD

The present disclosure relates to a method of surface treatment of a lithium metal negative electrode according the preamble of claim 1.

### BACKGROUND ART

Lithium metal negative electrodes are currently attracting attention as a core material for next-generation batteries. Lithium metal negative electrodes have a specific capacity of 10 times or more that of negative electrodes generally used in lithium-ion secondary batteries, and the weight and thickness thereof may be remarkably reduced, and thus they are usually used in the development of batteries having an energy density of 400Wh/kg or 1000Wh/L or more.

In a method of manufacturing a lithium metal negative electrode, a lithium foil having a predetermined thickness produced by extrusion and rolling or a copper foil attached to the lithium foil is used. Alternatively, lithium is deposited on a substrate using CVD or thermal evaporation to form a thin film.

Currently, a lithium metal negative electrode generally used is a rolled foil-type lithium foil, and during extrusion, rolling, and compression processes, lithium is exposed to oil and impurities during the processes. Thus, this leads to non-uniform surface reaction of the lithium metal negative electrode, which leads to non-uniform growth of lithium dendrites on the lithium metal negative electrode during battery charging/discharging, thereby increasing a deterioration in lifetime and a possibility of causing safety accidents due to internal short circuits.

Accordingly, there is a need for a surface treatment method capable of suppressing the non-uniform growth of lithium dendrites due to contamination and impurities on the surface of the lithium metal negative electrode and minimizing the dendric lithium growth during cycling test lifetime. A surface treatment of silicon electrode assemblies using dry ice blasting according to the preamble of claim 1 is disclosed in US2006/138081A1

### DESCRIPTION OF EMBODIMENTS

### TECHNICAL PROBLEM

An aspect is to provide a surface treatment method according to claim 1 capable of leading uniform lithium plating due to eliminating contaminants and impurities on the surface of a lithium metal anode and minimizing the side-reaction of lithium during cycle charging and discharging.

### Problem being solved

According to an aspect of the present disclosure, there provided a method of surface treatment of a lithium metal negative electrode, the method including a process of cleaning the surface of a lithium metal negative electrode using dry ice blasting, wherein in the dry ice blasting, fluorine gas is mixed with liquefied carbonic acid or dry ice pellets and then sprayed.

According to an illustrative aspect not forming part of the present invention, there provided a surface-treated lithium metal electrode including a lithium metal negative electrode; and a first protective layer formed on one surface of the lithium metal negative electrode and including at least one selected from lithium carbon oxide, lithium oxalate, lithium carbonate, lithium carbonite, and lithium fluoride.

According to another illustrative aspect not forming part of the present invention, there provided a lithium metal battery including the lithium metal negative electrode.

### ADVANTAGEOUS EFFECTS OF DISCLOSURE

In the method of surface treatment of the lithium metal negative electrode according to an aspect, the surface of the lithium metal negative electrode is cleaned and surface-treated using dry ice blasting, thereby improving the lifetime performance of a lithium metal battery compared to that of an untreated lithium metal negative electrode and providing stable charge-discharge efficiency during the lifetime of the battery.

### BRIEF DESCRIPTION OF DRAWINGS

FIG. 1 shows an image of a surface of a lithium metal negative electrode processed into a full roll type in Example 1. In FIG. 1, a silver-colored surface (a) is a lithium metal negative electrode portion not treated by dry ice blasting, and a light gray surface (b) is a lithium metal negative electrode portion treated by dry ice blasting.
FIG. 2 shows a negative electrode punched for manufacturing a cell, where the left portion of FIG. 2 is a lithium metal negative electrode cleaned and surface-treated using dry ice blasting, and the right portion thereof is a lithium metal negative electrode not surface-treated.
FIG. 3 is a graph evaluating the lifetime characteristics of lithium metal batteries of Example 1 and Comparative Example 1.
FIG. 4 is a graph comparing charge/discharge efficiencies of lithium metal batteries of Example 1 and Comparative Example 1 in the evaluation of the lifetime characteristics thereof.
FIG. 5 is a schematic view of a lithium metal battery according to an embodiment.

### MODE OF DISCLOSURE

Hereinafter, a method of surface treatment of a lithium metal negative electrode, a surface-treated lithium metal negative electrode, and a lithium metal battery including the same according to embodiments will be described in detail with reference to the attached drawings.

A surface treatment method of a lithium metal negative electrode according to an embodiment includes a process of cleaning a surface of a lithium metal negative electrode using dry ice blasting.

Dry ice blasting is a type of carbon dioxide cleaning, where dry ice, which is a solid form of carbon dioxide, is accelerated in a pressurized air stream to clean the surface. Although dry ice blasting is similar to other types of media spraying such as sand blasting and plastic bead blasting, the dry ice blasting is non-abrasive, non-conductive, non-flammable and environmentally harmless because dry ice is used as a spraying medium. In the dry ice blasting, since dry ice is adsorbed on the surface of the lithium metal negative electrode and sublimated, secondary wastes or chemical residues are not produced. Further, when dry ice hits the surface being cleaned, it may be converted into a gaseous state again.

As an example provided for illustrative purposes only and not forming part of the claimed invention, the dry ice blasting may be performed using liquefied carbonic acid (liquid CO₂) for generating dry ice or using dry ice pellets prepared using the liquefied carbonic acid.

Dry ice pellets used for dry ice blasting are very soft and have a much lower density than other media (sand or plastic beads) used for spray cleaning, and upon impact, these pellets sublimate almost immediately and transfer minimal kinetic energy to the surface. Therefore, a damage to the lithium metal negative electrode can be minimized. The sublimation process absorbs a large amount of heat from the surface while creating shear stress due to thermal shock. In this case, dry ice adsorbed on contaminants on the surface causes a sudden phase change from solid to gas and generates minute shock waves. Through this, the surface of the lithium metal negative electrode is protected, and only contaminants can be effectively removed.

When cleaning the surface of the lithium metal negative electrode using dry ice blasting, it is possible to increase the uniformity of the negative electrode surface and suppress non-uniform reactions by removing oil and other impurities on the surface of the lithium metal negative electrode, and it is possible to obtain charge-discharge efficiency (coulombic efficiency) and lifetime improvement effect of a lithium metal battery by allowing the used CO₂ (dry ice) to react with the surface of the lithium metal negative electrode to form a protective layer.

According to an illustrative example not forming part of the present invention, the dry ice blasting may be performed by making dry ice pellets through adiabatic expansion of liquefied carbonic acid in the vicinity of a cleaning nozzle or the cleaning nozzle and spraying the dry ice pallets on the surface of a lithium metal negative electrode through the cleaning nozzle.

According to another illustrative example not forming part of the present invention, the dry ice blasting may be performed by spraying liquefied carbonic acid or dry ice pellets on the surface of the lithium metal negative electrode with compressed air.

According to an embodiment, during the dry ice blasting, a spraying pressure may be 10 bar or lower. For example, during the dry ice blasting, the spraying pressure may be 8 bar or lower. For example, during the dry ice blasting, the spraying pressure may be 5 bar or lower. For example, during the dry ice blasting, the spraying pressure may be in a range of 0.5 bar to 10 bar or in a range of 0.5 bar to 5 bar. Within the above range, the lithium metal negative electrode may be surface-treated without excessive damage to the surface thereof.

As an example provided for illustrative purposes only and not forming part of the claimed invention, during the dry ice blasting, a spraying pressure may be in a range of 0.5 bar to 10 bar, a spraying angle may be in a range of 15° to 90°, and a spraying distance may be in a range of 5 mm to 150 mm. Within the above range, the lithium metal negative electrode may be surface-treated without excessive damage to the surface thereof to form a protective layer.

As an example provided for illustrative purposes only and not forming part of the claimed invention, a first protective layer may be formed on the surface of the lithium metal negative electrode. The first protective layer may include at least one selected from lithium carbon dioxide, lithium oxalate, lithium carbonate, and lithium carbonite.

In the dry ice blasting, fluorine gas is mixed with liquefied carbonic acid or dry ice pellets, and then the mixture is sprayed. When mixing and spraying fluorine gas, the first protective layer formed on the surface of the lithium metal negative electrode during the dry ice blasting process may further include lithium fluoride (LiF).

According to an illustrative example not forming part of the claimed invention, the method may further include a process of spraying fluorine gas on the surface of the lithium metal negative electrode after the cleaning using the dry ice blasting. After spraying the fluorine gas, a first protective layer including at least one selected from lithium carbon dioxide, lithium oxalate, lithium carbonate, and lithium carbonite; and a second protective layer formed on the first protective layer and including lithium fluoride (LiF) may be formed on the surface of the lithium metal negative electrode.

As described above, the surface of the lithium metal negative electrode cleaned by dry ice blasting becomes a very uniform surface, and the lithium precipitation and peeling of the uniform surface may occur. Further, the surface protective layer generated during the process enables side reactions of lithium and high-density lithium metal plating during charging, thereby improving the lifetime performance of lithium metal batteries as compared with untreated lithium metal and having stable charging and discharging efficiency during the life cycle. In addition, the use of dry ice blasting may contribute to suppressing internal short circuits caused by lithium dendrite growth, which is the biggest problem of lithium metal batteries, and ignition or explosion of the cells due to the internal short circuits.

A surface-treated lithium metal negative electrode according to an illustrative embodiment includes:
a lithium metal negative electrode; and
a first protective layer formed on at least one surface of the lithium metal negative electrode and including at least one selected from lithium carbon dioxide, lithium oxalate, lithium carbonate, and lithium carbonite.

The lithium metal negative electrode may be a lithium metal thin film or a lithium alloy thin film.

A lithium alloy may include lithium and a metal/metalloid alloyable with lithium. For example, the metal/metalloid alloyable with lithium may be Si, Sn, Al, Ge, Pb, Bi, Sb, Si-Y alloy (Y is an alkali metal, alkaline earth metal, group 13 element, group 14 element, transition metal, rare earth element, or a thereof, not Si), Sn-Y alloy (Y is an alkali metal, alkaline earth metal, group 13 element, group 14 element, transition metal, rare earth element, or a combination thereof, not Sn), or the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The first protective layer may include lithium fluoride (LiF).

According to an illustrative example, the surface-treated lithium metal negative electrode may further include a second protective layer including lithium fluoride (LiF) on the first protective layer.

A lithium metal battery according to another illustrative example includes the above-described surface-treated lithium metal negative electrode.

The lithium metal battery includes, for example, a positive electrode; the lithium metal negative electrode; and an electrolyte between the positive electrode and the lithium metal negative electrode.

The type of the lithium metal battery is not particularly limited, and examples thereof include lithium secondary batteries such as lithium ion batteries, lithium ion polymer batteries, and lithium sulfur batteries, as well as lithium primary batteries.

The lithium metal battery has excellent stability at a high voltage of 4.35 V or higher, for example, 4.4 V to 4.5 V.

In the lithium metal battery according to an illustrative example, after charging and discharging of 20 cycles to 30 cycles are carried out under the charge/discharge conditions of 0.5 C and 3 V to 4.4 V, a lithium electrodeposition layer having a morphology in the form of a jelly bean of about 10 to 30 µm, for example, about 20 µm, is formed on the surface of the lithium negative electrode.

For example, the lithium metal battery may be manufactured by the following method.

First, a positive electrode is prepared.

For example, a positive electrode active material composition in which a positive electrode active material, a conductive agent, a binder, and a solvent are mixed is prepared. The positive electrode active material composition is directly applied onto a metal current collector to form a positive electrode plate. Alternatively, the positive electrode active material composition may be cast on a separate support, and then a film obtained by peeling from the support may be laminated on a metal current collector to form a positive electrode plate. The type of the positive electrode is not limited to the types listed above, and may have a type other than the above types.

The positive electrode active material is a lithium composite oxide, and may be used without limitation as long as it is commonly used in the art.

For example, at least one of composite oxides of lithium and a metal selected from cobalt, manganese, nickel, and combinations thereof may be used. Specifically, a compound represented by any one of Formulae of LiₐA_{1-b}B_{b}D₂ (where, 0.90 ≤ a ≤ 1.8, 0 ≤ b ≤ 0.5); LiₐE_{1-b}B_{b}O_{2-c}D_{c} (where, 0.90 ≤ a ≤ 1.8, 0 ≤ b ≤ 0.5, 0 ≤ c ≤ 0.05); LiE_{2-b}B_{b}O_{4-c}D_{c} (where, 0 ≤ b ≤ 0.5, 0 ≤ c ≤ 0.05); LiₐNi_{1-b-c}Co_{b}B_{c}D_{α} (where, 0.90 ≤ a ≤ 1.8, 0 ≤ b ≤ 0.5, 0 ≤ c ≤ 0.05, 0 < α ≤ 2); LiₐNi_{1-b-c}Co_{b}B_{c}O_{2-α}F_{α} (where, 0.90 ≤ a ≤ 1.8, 0 ≤ b ≤ 0.5, 0 ≤ c ≤ 0.05, 0 < α < 2); LiₐNi_{1-b-c}CO_{b}B_{c}O_{2-α}F₂ (where, 0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (where, 0.90 ≤ a ≤ 1.8, 0 ≤ b ≤ 0.5, 0 ≤ c ≤ 0.05, 0 < α ≤ 2); LiₐNi_{1-b-c}Mn_{b}B_{c}O_{2-α}F_{α} (where, 0.90 ≤ a ≤ 1.8, 0 ≤ b ≤ 0.5, 0 ≤ c ≤ 0.05, 0 < α < 2); LiₐNi_{1-b-c}Mn_{b}B_{c}O_{2-α}F₂ (where, 0.90 ≤ a ≤ 1.8, 0 ≤ b ≤ 0.5, 0 ≤ c ≤ 0.05, 0 < α < 2); LiₐNi_{b}E_{c}G_{d}O₂ (where, 0.90 ≤ a ≤ 1.8, 0 ≤ b ≤ 0.9, 0 ≤ c ≤ 0.5, 0.001 ≤ d ≤ 0.1.);LiₐNi_{b}E_{c}G_{d}O₂ (where, 0.90 ≤ a ≤ 1.8, 0 ≤ b ≤ 0.9, 0 ≤ c ≤ 0.5, 0.001 ≤ d ≤ 0.1);LiₐNiG_{b}O₂ (where, 0.90 ≤ a ≤ 1.8, 0.001 ≤ b ≤ 0.1);LiₐCoG_{b}O₂ (where, 0.90 ≤ a ≤ 1.8, 0.001 ≤ b ≤ 0.1);LiₐMnG_{b}O₂ (where, 0.90 ≤ a ≤ 1.8, 0.001 ≤ b ≤ 0.1);LiₐMn₂G_{b}O₄ (where, 0.90 ≤ a ≤ 1.8, 0.001 ≤ b ≤ 0.1);QO₂; QS₂; LiQS₂; V₂O₅; LiV₂O₅; LiIO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄ may be used.

In Formulae above, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

For example, LiCoO₂, LiMnₓO₂ₓ(x=1, 2), LiNi₁₋ₓMnₓO₂ₓ(0<x<1), LiNi_{1-x-y}CoₓMn_{y}O₂ (0≤x≤0.5, 0≤y≤0.5), and LiFePO₄ may be used.

Also, a compound having a coating layer on the surface of the compound may be used, or a mixture of the compound and a compound having a coating layer may be used. The coating layer may include a coating element compound of an oxide of a coating element, a hydroxide of a coating element, an oxyhydroxide of a coating element, an oxycarbonate of a coating element, or a hydroxycarbonate of a coating element. The compound constituting this coating layer may be amorphous or crystalline. As the coating element included in the coating layer, Mg, Al, Co, K, Na, Ca, Si, Ti, V, Sn, Ge, Ga, B, As, Zr, or a mixture thereof may be used. In the process of forming the coating layer, any coating method may be used as long as this compound may be coated with such elements by a method that does not adversely affect the physical properties of the positive electrode active material (for example, spray coating, dipping or the like). This coating method will be understood by those skilled in the art, so that a detailed description thereof will be omitted.

In order to obtain a high-density lithium metal battery, it is advantageous to use a high-density positive electrode. LiCoO₂ may be used in manufacturing a high-density positive electrode.

The positive electrode active material, for example, the positive electrode of the lithium metal battery may include a nickel-rich lithium composite oxide having a nickel content of 20 wt% to 90 wt%, for example, 30 wt% to 80 wt%, based on the total weight of the transition metal in the lithium metal battery. This nickel-rich lithium composite oxide is required to be improved in high-temperature performance. When the lithium salt and a disultone-based compound are added to the electrolyte, an increase in resistance at a high temperature is reduced and charge/discharge characteristics are improved.

The lithium composite oxide may be, for example, a compound represented by Formula 3 below.

[Formula 3] LiₐNi_{1-b-c}Co_{b}M'_{c}O₂

in Formula 3, 0.90 ≤ a ≤ 1.8, 0 < b ≤ 0.5, and 0 ≤ c ≤ 0 are satisfied, and
M' is Al, Mn, Cr, Fe, Mg, Sr, V or a combination thereof.

The above-described nickel-rich lithium composite oxide is, for example, LiNi_{0.6}Co_{0.2}Mn_{0.2}O₂, LiNi_{0.5}Co_{0.2}Mn_{0.3}O₂, or LiNi_{0.8}Co_{0.15}Al_{0.05}O₂.

As the conductive agent, carbon black, graphite fine particles, natural graphite, artificial graphite, acetylene black, ketjen black, carbon fiber, carbon nanotubes, metal powder, metal fiber or metal tube of copper, nickel, aluminum, or silver, or a conductive polymer such as a polyphenylene derivative may be used, but the present disclosure is not limited thereto, and any conductive agent may be used as long as it is used in the art.

As the binder, vinylidene fluoride/hexafluoropropylene copolymer, polyvinylidene fluoride, polyimide, polyethylene, polyester, polyacrylonitrile, polymethyl methacrylate, polytetrafluoroethylene (PTFE), carboxymethyl cellulose-styrene-butadiene rubber (SMC/SBR) copolymer, styrene butadiene rubber-based polymer, or a mixture thereof may be used. The binder is not limited thereto, and any binder may be used as long as it is used in the art.

As the solvent, N-methylpyrrolidone, acetone, or water may be used as the solvent, but the present disclosure is not limited thereto, and any solvent may be used as long as it is used in the art.

The contents of the positive electrode active material, the conductive agent, the binder, and the solvent are levels commonly used in lithium metal batteries, one or more of the conductive agent, the binder, and the solvent may be omitted depending on the use and configuration of the lithium metal battery.

As the lithium metal negative electrode, a lithium metal thin film or a lithium alloy thin film is prepared by performing cleaning and surface treatment using dry ice blasting as described above.

Next, a separator to be inserted between the positive electrode and the lithium metal negative electrode is prepared.

As the separator, an insulating thin film having high ion permeability and mechanical strength is used. The pore diameter of the separator is generally 0.01 µm to 10 µm, and the thickness thereof is generally 5 µm to 20 µm. As the separator, a sheet or non-woven fabric made glass fiber, polyethylene, or an olefin-based polymer such as polypropylene. When a solid polymer electrolyte is used as the electrolyte, the solid polymer electrolyte may also serve as the separator.

As a specific example of the separator, a polyethylene film, a polypropylene film, a polyvinylidene fluoride film, or a multilayer film of two or more thereof may be used. Alternatively, a mixed multilayer film such as a two-layer separator of polyethylene/polypropylene, a three-layer separator of polyethylene/polypropylene/polyethylene, or a three-layer separator of polypropylene/polyethylene/polypropylene may be used.

The lithium metal battery may use an electrolyte commonly used as the electrolyte.

The electrolyte may be a liquid electrolyte, a gel electrolyte, a solid electrolyte, a polymer ionic liquid, or a combination thereof.

The electrolyte may be a liquid electrolyte. The liquid electrolyte may include a metal salt and an organic solvent.

In the liquid electrolyte, the organic solvent may include a low-boiling solvent. The low-boiling solvent refers to a solvent having a boiling point of 200°C or less at 25°C and 1 atmosphere.

The organic solvent may include one or more selected from dialkyl carbonates, cyclic carbonates, linear or cyclic esters, linear or cyclic amides, aliphatic nitriles, sulfone compounds, linear or cyclic ethers, and derivatives thereof.

More specifically, the organic solvent may include one or more selected from Dimethyl carbonate (DMC), diethyl carbonate (DEC), ethyl methyl carbonate (EMC), methyl propyl carbonate, ethyl propyl carbonate, methyl isopropyl carbonate, diethyl carbonate (DEC), dipropyl carbonate, dibutyl carbonate, propylene carbonate (PC), ethylene carbonate (EC), fluoroethylene carbonate (FEC), butylene carbonate, dimethylene glycol dimethyl ether, trimethylene glycol dimethyl ether, tetraethylene glycol dimethyl ether, polyethylene glycol dimethyl ether, dimethyl sulfone, ethyl methyl sulfone, diethylsulfone, adiponitrile, 1,1,2,2-tetrafluoroethyl 2,2,3,3-tetrafluoropropyl ether, ethyl propionate, ethyl butyrate, benzonitrile, acetonitrile, tetrahydrofuran, 2-methyltetrahydrofuran , Gamma-valerolactone, gamma-butyrolactone, succinonitrile (SN), N-methyl-2-pyrrolidinone, dioxolane, 4-methyldioxolane, N,N-dimethylformamide, N ,N-dimethylacetamide, dimethylsulfoxide, dioxane, sulfolane, dichloroethane, chlorobenzene, and nitrobenzene, but the present disclosure is not limited thereto, and any organic solvent may be used as long as it is used in the art.

Examples of the lithium salt may include LiSCN, LiN(CN)₂, LiClO₄, LiBF₄, LiAsF₆, LiPF₆, LiCF₃SO₃, Li(CF₃SO₂)₂N, Li(CF₃SO₂)₃C, LiSbF₆, LiN(SO₂CF₃)₂, Li(FSO₂)₂N, LiC₄F₉SO₃, LiN(SO₂CF₂CF₃)₂, LiSbF₆, LiPF₃(CF₂CF₃)₃, LiPF₃(C₂F₅)₃, LiPF₃(CF₃)₃, LiCI, LiF, LiBr, Lil, LiB(C₂O₄)₂, lithium difluoro(oxalato)borate (LiFOB), lithium bis(oxalato)borate (LiBOB), and mixtures thereof.

The lithium salt may be a fluorine-containing sulfone-based compound. The fluorine-containing sulfone-based compound may be LiN(FSO₂)₂(LiFSI), LiN(CF₃SO₂)₂(LiTFSI), LiN(CF₂SO₂)(CF₃CF₂CF₂CF₂SO₂), LiN(CF₃CF₂SO₂)₂, LiC(CF₃SO₂)₂, or LiC(CF₃CF₂SO₂)₂.

The content of the lithium salt in the liquid electrolyte may be in a range of 0.1 M to 7 M based on the organic solvent. For example, the content of the lithium salt may in a range of 0.5 M to 5 M based on the organic solvent. For example, the content of the lithium salt may in a range of 1 M to 3 M based on the organic solvent. When the content of the lithium salt is within the above range, the effect of improving the lifetime characteristics of the lithium metal battery is excellent without increasing the internal resistance of the electrolyte.

For the purpose of improving charge/discharge properties and flame retardancy, for example, pyridine, triethylphosphite, triethanolamine, cyclic ether, ethylene diamine, n-glyme, hexamethyl phosphoramide, nitrobenzene derivative, sulfur, quinone imine dye, N-substituted oxazolidinone, N, N-substituted imidazolidine, ethylene glycol dialkyl ether, ammonium salt, pyrrole, 2-methoxy ethanol, aluminum trichloride, or the like. may be added to the liquid electrolyte. In some cases, in order to impart non-flammability, a halogen-containing solvent such as carbon tetrachloride or ethylene trifluoride may be further included.

The liquid electrolyte may further include an ionic liquid. Any ionic liquid may be used as long as it is generally used in preparing an electrolyte in the art.

The ionic liquid may include i) at least one or more cations selected from ammonium-based cations, pyrrolidinium-based cations, pyridinium-based cations, pyrimidinium-based cations, imidazolium-based cations, piperidinium-based cations, pyrazolium-based cations, oxazolium-based cations, pyridazinium-based cations, phosphonium-based cations, sulfonium-based cations, triazole-based cations, and mixtures thereof; and ii) anions.

Examples of the anions may include, but are not limited to, BF₄⁻, PF₆⁻, AsF₆⁻, SbF₆⁻, AlCl₄⁻ , HSO₄⁻, ClO₄⁻, CH₃SO₃⁻, CF₃CO₂⁻, (CF₃SO₂)₂N⁻, (FSO₂)₂N⁻, Cl, Br, I⁻, SO₄⁻, CF₃SO₃⁻, (C₂F₅SO₂)₂N⁻, (C₂F₅SO₂)(CF₃SO₂)N⁻, NO₃⁻, Al₂Cl₇⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, and (O(CF₃)₂C₂(CF₃)₂O)₂PO⁻.

The liquid electrolyte may have a viscosity of 5 cP or less, for example, 2.5 cp to 4.0 cp at 25°C. When the viscosity of the electrolyte is within the above-described range, an electrochemical device having excellent conductivity and oxidation resistance of the electrolyte and improved high-voltage stability may be obtained.

The ionic conductivity of the liquid electrolyte is 1.0 mS/cm or more, for example, 1 to 5 mS/cm at 25°C.

The gel electrolyte is an electrolyte having a gel phase, and may have components and phases well known in the art.

The gel electrolyte may contain, for example, a polymer and a polymer ionic liquid.

The polymer may be, for example, a solid graft (block) copolymer.

The solid electrolyte may be an organic solid electrolyte, an inorganic solid electrolyte, or a combination thereof.

As the organic solid electrolyte, for example, a polyethylene derivative, a polyethylene oxide derivative, a polypropylene oxide derivative, a phosphate ester polymer, polyegitated lysine, polyester sulfide, polyvinyl alcohol, polyvinylidene fluoride, a polymer containing an ionic dissociation group, or the like may be used.

As the inorganic solid electrolyte, Cu₃N, Li₃N, LiPON, Li₃PO₄.Li₂S.SiS₂, Li₂S.GeS₂.Ga₂S₃,(Na,Li)₁₊ₓTi₂₋ₓAlₓ(PO₄)₃(0.1≤x≤0.9), Li₁₊ₓHf₂₋ₓAlₓ(PO₄)₃(0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, NLi_{0.3}La_{0.5}TiO₃, Na₅MSi₄O₁₂ (M is a rare-earth element such as Nd, Gd, or Dy) Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃(0≤X≤0.8, 0≤Y≤1.0, M is Nd, Sm, Eu, Gd, Tb, Dy, Ho, Er, Tm orYb), Li_{1+x+y}QₓTi₂₋ₓSi_{y}P_{3-y}O₁₂ (0<x≤0_{.4}, 0<y≤0.6, Q is Al or Ga), Li₆BaLa₂Ta₂O₁₂, Li₇La₃Zr₂O₁₂, Li₃La₃Nb₂O₁₂, Li₅La₃M₂O₁₂ (M is Nb or Ta), or Li₇₊ₓAₓLa₃₋ₓZr₂O₁₂ (0<x<3, A is Zn) may be used.

As the polymeric ionic liquid, a polymer obtained by polymerizing ionic liquid monomers may be used, and a compound obtained in the form of a polymer may be used. Such a polymeric ionic liquid has high solubility in an organic solvent, and has an advantage of further improving ionic conductivity when added to an electrolyte.

In the case of polymerizing the aforementioned ionic liquid monomer to obtain a polymeric ionic liquid, the ionic liquid is prepared to have appropriate anions capable of imparting solubility in an organic solvent through an anion substitution reaction after cleaning and drying the resultant product subjected to a polymerization reaction.

The polymer ionic liquid according to an embodiment may contain a repetition unit including i) one or more cations selected from ammonium-based cations, pyrrolidinium-based cations, pyridinium-based cations, pyrimidinium-based cations, imidazolium-based cations, piperidinium-based cations, pyrazolium-based cations, oxazolium-based cations, pyridazinium-based cations, phosphonium-based cations, sulfonium-based cations, triazole-based cations, and mixtures thereof, and ii) one or more anions selected from ii) BF₄⁻, PF₆⁻, AsF₆⁻, SbF₆⁻, AlCl₄⁻, HSO₄⁻, CH₃SO₃⁻, CF₃CO₂⁻, (CF₃SO₂)₂N⁻, Cl, Br, I⁻, SO₄⁻, CF₃SO₃⁻, (C₂F₅SO₂)₂N⁻, (C₂F₅SO₂)(CF₃SO₂)N⁻, NO₃⁻, Al₂Cl₇⁻, CH₃COO⁻, (CF₃SO₂)₃C⁻, (CF₃CF₂SO₂)₂N⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, and (O(CF₃)₂C₂(CF₃)₂O)₂PO⁻.

The polymeric ionic liquid may be prepared by polymerizing ionic liquid monomers. The ionic liquid monomer has a functional group polymerizable with a vinyl group, allyl group, acrylate group, methacrylate group, or the like, and may include one or more cations selected from ammonium-based cations, pyrrolidinium-based cations, pyridinium-based cations, pyrimidinium-based cations, imidazolium-based cations, piperidinium-based cations, pyrazolium-based cations, oxazolium-based cations, pyridazinium-based cations, phosphonium-based cations, sulfonium-based cations, triazole-based cations, and mixtures thereof, and the aforementioned anions.

The ionic liquid monomer is, for example, 1-vinyl-3-ethylimidazolium bromide or a compound represented by Formula 4 or 5 below.

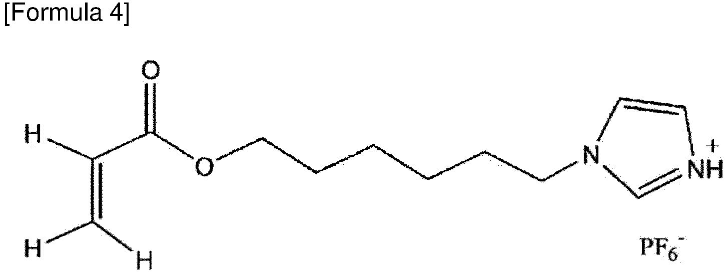

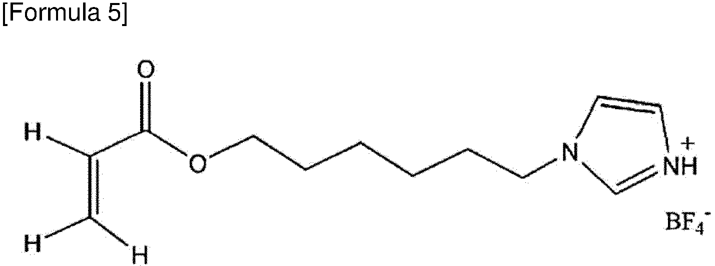

Examples of the aforementioned polymer ionic liquid may include a compound represented by Formula 6 and a compound represented by Formula 7.

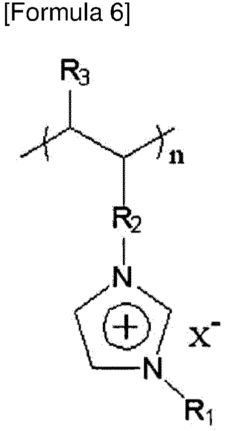

In Formula 6, R₁ and R₃ are each independently hydrogen, a substituted or unsubstituted C1-C30 alkyl group, a substituted or unsubstituted C2-C30 alkenyl group, a substituted or unsubstituted C2-C30 alkynyl group, a substituted or unsubstituted C6-C30 aryl group, a substituted or unsubstituted C2-C30 heteroaryl group, or a substituted or unsubstituted C4-C30 carbocyclic group. In Formula 6, R₂ simply represents a chemical bond or represents a C1-C3 alkylene group, a C6-C30 arylene group, a C2-C30 heteroarylene group, or a C4-C30 carbocyclic group,
X- represents an anion of the ionic liquid, and
n is 500 to 2800.

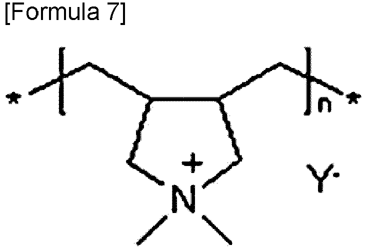

In Formula 7, Y⁻ is defined the same as X in Formula 6, and
n is 500 to 2800.

In Formula 7, Y⁻ is, for example, bis(trifluoromethanesulfonyl)imide (TFSI), BF₄, or CF₃SO₃.

The polymer ionic liquid includes, for example, a cation selected from cations of poly(1-vinyl-3-alkylimidazolium), poly(1-allyl-3-alkylimidazolium), and poly(1-(methacryloyloxy)-3-alkylimidazolium), and anion selected from (CH₃COO⁻, CF₃COO⁻, CH₃SO₃⁻, CF₃SO₃⁻, (CF₃SO₂)₂N⁻, (CF₃SO₂)₃C⁻, (CF₃CF₂SO₂)₂N⁻, C₄F₉SO₃⁻, C₃F₇COO⁻, and (CF₃SO₂)(CF₃CO)N⁻.

The compound represented by Formula 7 may include polydiallyldimethylammonium bis(trifluoromethanesulfonyl)imide.

The high-molecular-weight ionic liquid may include a low-molecular-weight polymer, a thermally stable ionic liquid, and a lithium salt. The low-molecular-weight polymer may have an ethylene oxide chain. The low-molecular-weight polymer may be glyme. Here, the glyme is, for example, polyethylene glycol dimethyl ether (polyglyme), tetraethylene glycol dimethyl ether (tetraglyme), and triethylene glycol dimethyl ether (triglyme).

The weight average molecular weight of the low-molecular-weight polymer is 75 to 2000, for example 250 to 500.

Further, for the purpose of improving charge/discharge characteristics and flame retardancy, for example, pyridine, triethylphosphite, triethanolamine, cyclic ether, ethylene diamine, n-glyme, hexamethyl phosphoramide, nitrobenzene derivative, sulfur, quinone imine dye, N-substituted oxazolidinone , N, N-substituted imidazolidine, ethylene glycol dialkyl ether, ammonium salt, pyrrole, 2-methoxy ethanol, aluminum trichloride, or the like may be added to the electrolyte. In some cases, in order to impart non-flammability, a halogen-containing solvent such as carbon tetrachloride or ethylene trifluoride may be further included.

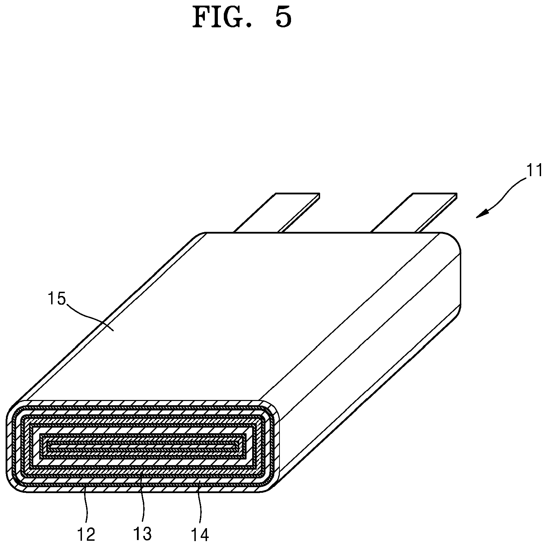

As shown in FIG. 5, the lithium metal battery 11 includes a positive electrode 13, a lithium metal negative electrode 12, and a separator14. The positive electrode 13, the lithium metal negative electrode 12, and the separator 14 are wound or folded and then accommodated in a battery case 15. Subsequently, an electrolyte is injected into the battery case 15, and the battery case 15 is sealed with a cap assembly 16 to complete the lithium battery 11. The battery case may have a cylindrical shape, a rectangular shape, or a thin film shape. For example, the lithium metal battery may be a large thin film-type battery. The lithium metal battery may be a lithium ion battery.

The lithium metal battery is suitable for electric vehicles (EV) because it has excellent lifetime characteristics and high rate characteristics. For example, the lithium metal battery is suitable for hybrid vehicles such as plug-in hybrid electric vehicles (PHEV). Further, the lithium metal battery may be used in a field where a large amount of power storage is required. For example, the lithium metal battery may be used for electric bicycles, power tools, and the like.

Hereinafter, the present disclosure will be described in more detail through Examples and Comparative Examples (which do not fall within the scope of the present invention and are provided for illustrative purposes only). However, these Examples are set forth to illustrate the present disclosure, and the scope of the present disclosure is not limited thereto.

### Comparative Example 1

A hopper-type spraying apparatus used in dry ice blasting consists of one mixing hose (dry ice pellets and high-pressure gas (argon) are used), and the dry ice pellets are guided to a T-type mixing unit and are sprayed into a nozzle by high-pressure gas (argon). A nozzle gun was kept at a distance of 100mm at an inclination angle of 60° to the surface of a lithium metal negative electrode, and the dry ice pellets were sprayed at a pressure of 1.4bar. For continuous processes, the lithium metal negative electrode was subjected to unwinding and rewinding at a speed of 10m/min. As a result, a lithium metal negative electrode having a uniform surface formed of small particles and having a protective layer formed during the adsorption sublimation process of the dry ice pellets was obtained. After punching this lithium metal negative electrode for cell fabrication, a negative electrode having a desired size was prepared.

LiCoOz, a conductive agent (Super-P; Timcal Ltd.),polyvinylidene fluoride (PVdF), and N-pyrrolidone were mixed to obtain a positive electrode composition. In the positive electrode composition, the mixing weight ratio of LiCoO₂, the conductive agent and PVDF was 97:1.5:1.5.

The positive electrode composition was applied on an aluminum foil (thickness: about 15 µm) and dried at 25°C, and then the dried result was dried at about 110°C in vacuum to prepare a positive electrode.

A polyethylene/polypropylene separator was laminated to be disposed between the positive electrode and the lithium metal negative electrode, and an electrolyte in which 1.3 M LiPF₆ is dissolved in a mixed solvent of EC (ethylene carbonate): EMC (ethyl methyl carbonate): DEC (diethyl carbonate) (3: 5: 2 volume ratio) was used to manufacture a stack-type lithium metal battery.

### Comparative Example 2

The lithium metal secondary battery according to Comparative Example 1 was manufactured in a jelly roll type through winding instead of laminating.

### Example 3

A lithium metal secondary battery was manufactured in the same manner as in Comparative Example 1, except that cleaning and surface treatment were performed by mixing and spraying liquefied carbonic acid gas and fluorine gas on the surface of the lithium metal negative electrode in Comparative Example 1.

### Comparative Example 4

A lithium metal secondary battery was manufactured in the same manner as in Comparative Example 1, except that a lithium metal negative electrode not having been subjected to dry ice blasting was used.

### Evaluation of Comparative Example 1: Analysis of surface image of lithium metal negative electrode

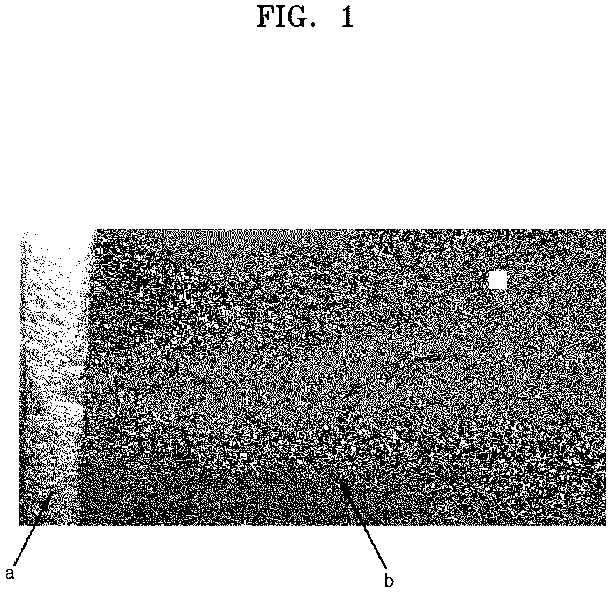

An image of a lithium metal negative electrode manufactured using dry ice blasting in Comparative Example 1 is shown in FIG. 1. FIG. 1 shows an image of a surface of a lithium metal negative electrode processed into a full roll type. In FIG. 1, the silver-colored surface (a) is a lithium metal negative electrode portion not treated by dry ice blasting, and the light gray surface (b) is a lithium metal negative electrode portion treated by dry ice blasting.

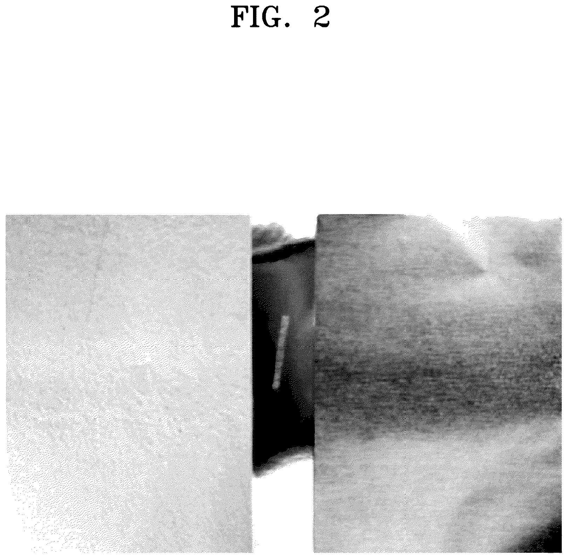

FIG. 2 shows a negative electrode punched for manufacturing a cell. The left portion of FIG. 2 is a lithium metal negative electrode cleaned and surface-treated using dry ice blasting, and the right portion thereof is a lithium metal negative electrode not surface-treated.

As shown in FIGS. 1 and 2, the lithium metal negative electrode cleaned and surface-treated using dry ice blasting is composed of grain boundaries each having a uniform surface and a small area as compared with the untreated lithium metal negative electrode, and. shows a gray color due to lithium carbonate (Li₂CO₃)-based surface treatment due to the sublimation process of the lithium surface and dry ice during cleaning.

Due to an increase in specific surface area, the electrolyte diffuses at a much faster rate during an impregnation test. As a result of evaluation of a contact angle in impregnation evaluation, the non-treated lithium negative electrode showed a contact angle of 50° to70°, and the treated lithium negative electrode showed a contact angle of 20° to 45°.

### Evaluation of Comparative Example 2: Evaluation of battery characteristics

The lithium metal batteries of Comparative Example 1 and Comparative Example 4 were charged and discharged under the following conditions.

The lithium metal battery was charged with a constant current of 0.1 C rate until a voltage reached 4.30 V (vs. Li), and then was cut-off at a current of 1/20 CA rate while maintaining the voltage at 4.30 V in a constant current mode. Subsequently, during discharging, the battery was discharged with a constant current of 0.1 C rate until the battery voltage reached 2.8 V (vs. Li) (formation process, 1^{st} cycle). This charging/discharging process was performed twice to complete the formation process.

The lithium metal battery having undergone the formation process was charged with a constant current of i) 0.1 C or ii) 0.2 C and a constant voltage at room temperature (25°C.) within a voltage range of 3.0 V to 4.3 V as compared with lithium metal until the battery was cut-off at a current of 1/20 CA rate, and was then discharged with a current of 1 C until a cut-off voltage reached 3 V.

The above-described charging and discharging process was repeatedly performed until the capacity or voltage of the cell reached the termination condition. In Comparative Example 4, the charging and discharging process were performed up to 80 times, and in Comparative Examples 1 and 2, the charging and discharging process were performed up to 110 times.

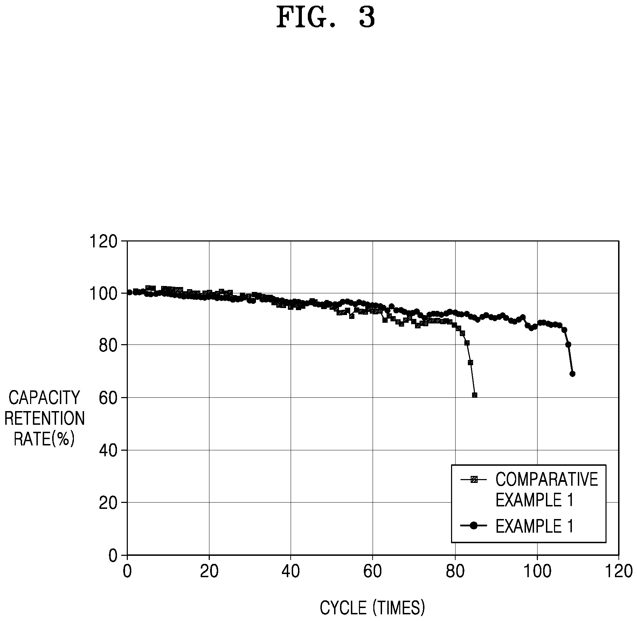

In order to compare the lifetime performance of a lithium metal battery using the lithium metal negative electrode treated by dry ice blasting in Comparative Example 1 with that of a lithium metal battery using the lithium metal negative electrode not treated in Comparative Example 4, a capacity retention rate in each cycle was measured, and the results thereof are shown in FIG. 3. The capacity retention rate is defined by Equation 1 below. Capacity retention rate (%) = (discharged capacity in each cycle/discharged capacity in 1st cycle) × 100

As shown in FIG. 3, it may be found that lifetime characteristics of the lithium metal negative electrode ((b) of FIG. 1) surface-treated by dry ice blasting are remarkably improved as compared with those of the non-treated lithium metal negative electrode ((a) of FIG. 1).

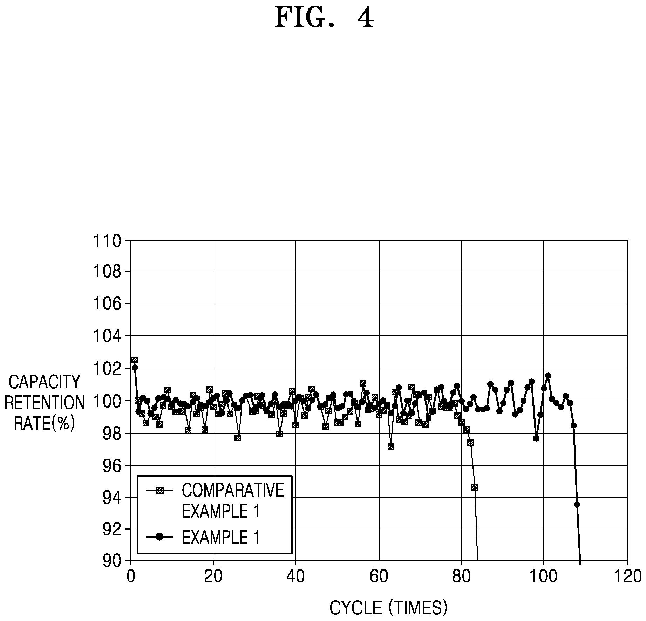

In addition, charge-discharge efficiencies of lithium metal batteries of Comparative Example 1 and Comparative Example 4 during evaluation of lifetime characteristics thereof were compared, and the results are shown in FIG. 4. The charge-discharge efficiency is defined by Equation 2 below. Charge-distance efficiency [%] = [discharge capacity in each cycle/charge capacity in each cycle) × 100

As shown in FIG. 4, it may be found that the lithium metal negative electrode surface-treated by dry ice blasting has a stable charge/discharge efficiency during lifetime as compared with the non-treated lithium metal negative electrode.

From the above results, a uniform surface and a protective layer are formed by surface treatment using dry ice blasting, and thus it is expected to contribute to suppressing internal short circuits caused by lithium dendrite growth, which is the biggest problem of lithium metal batteries, and ignition or explosion of the cells due to the internal short circuits.

Heretofore, preferred embodiments according to the present disclosure have been described with reference to the drawings and embodiments, but these are only exemplary, and it will be understood that various modifications and other equivalent embodiments are possible from those of ordinary skill in the art. Therefore, the protection scope of the present disclosure should be determined by the appended claims.

## Claims

1. A method of surface treatment of an electrode, the method comprising:
cleaning a surface of an electrode using dry ice blasting;
**characterized in that** the electrode is a lithium metal negative electrode; and
in the dry ice blasting, fluorine gas is mixed with liquefied carbonic acid or dry ice pellets and then sprayed.

2. The method of claim 1, wherein
in the dry ice blasting, a first protective layer including at least one selected from lithium carbon dioxide, lithium oxalate, lithium carbonate, and lithium carbonite is formed on the surface of the lithium metal negative electrode, and
the first protective layer further includes lithium fluoride (LiF).

## Patentansprüche

1. Ein Verfahren zur Oberflächenbehandlung einer Elektrode, wobei das Verfahren Folgendes beinhaltet:
Reinigen einer Oberfläche einer Elektrode unter Verwendung von Trockeneisstrahlen;
**dadurch gekennzeichnet, dass** die Elektrode eine negative Lithium-Metall-Elektrode ist; und
bei dem Trockeneisstrahlen Fluorgas mit verflüssigter Kohlensäure oder Trockeneispellets gemischt und dann gesprüht wird.

2. Verfahren gemäß Anspruch 1, wobei
bei dem Trockeneisstrahlen eine erste Schutzschicht, die mindestens ein Ausgewähltes von Lithiumkohlendioxid, Lithiumoxalat, Lithiumkarbonat und Lithiumkarbonit umfasst, auf der Oberfläche der negativen Lithium-Metall-Elektrode gebildet wird und
die erste Schutzschicht ferner Lithiumfluorid (LiF) umfasst.

## Revendications

1. Un procédé de traitement de surface d'une électrode, le procédé comprenant :
le nettoyage d'une surface d'une électrode en ayant recours à une projection de glace sèche ;
**caractérisé en ce que** l'électrode est une électrode négative au lithium métallique ; et
lors de la projection de glace sèche, du fluor gazeux est mélangé avec de l'acide carbonique liquéfié ou des pellets de glace sèche et ensuite pulvérisé.

2. Le procédé de la revendication 1, dans lequel
lors de la projection de glace sèche, une première couche protectrice incluant au moins un composé sélectionné parmi le lithium-dioxyde de carbone, l'oxalate de lithium, le carbonate de lithium, et le carbonite de lithium est formée sur la surface de l'électrode négative au lithium métallique, et
la première couche protectrice inclut en outre du fluorure de lithium (LiF).
